# EUROPEAN PATENT APPLICATION

(11) **EP 0 665 689 A2**
(43) Date of publication of application: **02.08.1995**
(21) Application number: 95100904.2
(22) Date of filing: 24.01.1995
(51) Int. Cl.: H04N 5/926

(54) **Recording pattern making method and recording apparatus for compressed moving picture**

(30) Priority: 31.01.1994 JP 9108/94
(71) Applicant: HITACHI, LTD., Chiyoda-ku, Tokyo 101 (JP)
(72) Inventor: Takahashi, Masaru, Totsuka-ku, Yokohama-shi, Kanagawa 244 (JP); Oku, Masuo, Kamakura-shi, Kanagawa 247 (JP); Tsuboi, Yukitoshi, Totsuka-ku, Yokohama-shi, Kanagawa 245 (JP); Tsukiji, Nobuyoshi, Totsuka-ku, Yokohama-shi, Kanagawa 244 (JP)
(74) Representative: Altenburg, Udo, Dipl.-Phys.

(57) **Abstract**

The object of the present invention is to realize a recording pattern capable of coping with plural high speed search modes in recording inter frame coded data for moving pictures.

A recording region (3) is shared between 3-fold speed search in the normal direction and 3-fold speed search in the reverse direction. A recording region (20) is also shared between 9-fold speed search in the normal direction and 9-fold speed search in the reverse direction. The recording region (3) and the recording region (20) have a common part.

## Description

### Background of the Invention

### Field of the Invention

The present invention relates to a recording pattern making method in recording compressed moving picture data while recording tracks are sequentially formed in a tape-shaped recording medium and, more particularly, to a method of reserving a recording region for spacial data for search mode.

### Description of the Related Art

Picture coding technologies for compressing moving picture are described in detail in The Journal of the institute of Television Engineers of Japan, Vol.45, NO.7 (1991), pp.800 to 819. In the past, an intra frame coding technology has been employed with considering high speed search, editing and simplification of coding circuit in the field of the compressed moving picture recording apparatus typical of VTR. However, a technology of inter frame coding with prediction is becoming the mainstream in application to digital TV broadcasting or the transmission through network because a high compression rate can be obtained by the technology of inter frame coding with prediction. Therefore, there will arise need for a compressed moving picture recording apparatus to record moving pictures compressed by the inter frame coding with prediction.

One of the most important problems in recording the moving pictures of inter frame coding with prediction is the picture quality of high speed search mode. That is, the inter frame coding with prediction is to code the difference between the picture data and an inter frame predictor, and the prerequisite for decoding is that the reference frame is known. However, since the data during high speed search is reproduced only discretely, the prerequisite is not satisfied.

In the inter frame coding with prediction, a frame of coded data itself not taking difference, called intra frame, is inserted every a given number of frames. Although variable length coding of picture data is generally performed after the data is transformed into coefficients from DC coefficient to high frequency coefficients by an orthogonal transformation such as discrete cosine transformation, a reproduced picture having a some grade of picture quality can be obtained if there is a low frequency coefficient among them. Therefore, in the past, it has been proposed that a dedicated region to record low frequency coefficients for the intra frame is provided in the portion along the trace of a head during high speed search to decode reproduced pictures using the data reproduced form the region during high speed search. However, there has been no consideration on the method of effectively arranging the recording region in which plural kinds of high speed modes can be performed.

In the conventional technology, the picture quality of search mode is improved by providing a region to record data for high speed search in the portion along the trace of head during high speed search. However, there has been no consideration on the method of arrangement of the region in which plural kinds of high speed modes can be performed. With consideration in comparing with the usability of present analog VTR's for consumer use, it is required to perform plural kinds of high speed search modes from a relatively low speed to a high speed. If a lot of regions, however, are provided along the traces of head corresponding to the high speed modes each, the amount of data to be recorded increases to increase the recording rate and the process becomes complex to increase the circuit scale.

### Summary of the Invention

The object of the present invention is to effectively arranging the recording regions capable of performing plural kinds of high speed search modes.

In order to attain the above object, the recording pattern making method for compressed moving picture and the apparatus for compressed moving picture according to the present invention is characterized by sharing the recording regions for high speed search data for two search speed modes having different speeds.

And the recording pattern making method for compressed moving picture and the apparatus for compressed moving picture according to the present invention is characterized by recording the same data in the recording regions for high speed search data for two search speed modes having the same absolute value of speed and different directions.

Further, the recording pattern making method for compressed moving picture and the apparatus for compressed moving picture according to the present invention is characterized by repeating multiplex patterns with the period of the least common multiple of the periods of head traces for all the corresponding multiple speed search modes.

According to the present invention, the amount of recording data can be decreased by sharing recording regions.

Further, the processing becomes simple by recording the same data with two multiple speed search modes.

Furthermore, the circuit scale can be decreased due to periodic processing by periodically repeating the multiplex patterns.

### Brief Description of the Drawings

FIG.1 is a chart showing the recording pattern and the head trace pattern of 9-hold speed search in the normal direction on a tape of an embodiment in accordance with the present invention.

FIG.2 is a chart showing the recording pattern and the head trace pattern of 9-hold speed search in the reverse direction on a tape of an embodiment in accordance with the present invention.

FIG.3 is a chart showing the recording pattern and the head trace pattern of 3-hold speed search in the normal direction on a tape of an embodiment in accordance with the present invention.

FIG.4 is a chart showing the recording pattern and the head trace pattern of 3-hold speed search in the reverse direction on a tape of an embodiment in accordance with the present invention.

FIG.5 is a chart showing the recording pattern capable coping with 18-fold search and the head trace pattern of 18-fold search in the normal direction.

FIG.6 is a chart showing the recording pattern capable coping with 18-fold search and the head trace pattern of 18-fold search in the reverse direction.

FIG.7 is a circuit block diagram of a recorder realizing the multiplex pattern in a recording region of special search data in accordance with the present invention.

FIG.8 is a view showing the arrangement of heads on a rotating cylinder.

FIG.9 is a view showing the arrangement of heads on a rotating cylinder of adjacent head type.

FIG.10 is a chart showing a recording pattern on a tape corresponding to the adjacent head type.

FIG.11 is a chart showing a recording pattern on a tape capable of coping with 18-fold speed search of adjacent head type.

### Detailed Description of the Preferred Embodiments

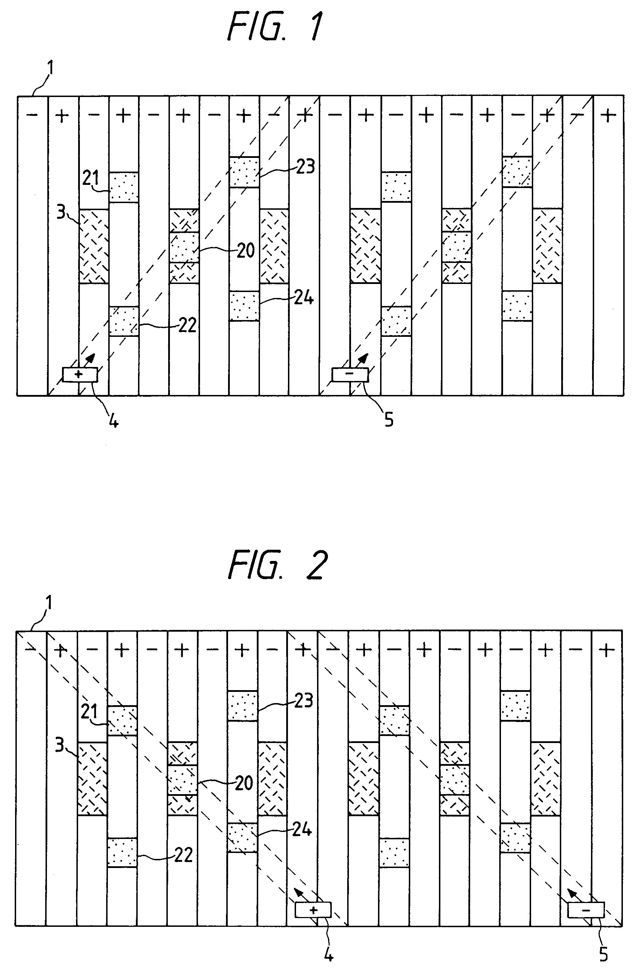

FIG.1 shows an embodiment of a recording pattern on a tape according to the present invention. The numeral 1 indicates one recording track which is alternatively formed with a positive azimuth head and a negative azimuth head facing with each other at 180°. Although the recording tracks in the figure are perpendicular to the longitudinal direction of the tape, the recording tracks are generally inclined. Why the recording tracks are shown in perpendicular is because of the purpose of easily understanding, the effect of the present invention does not change if the recording tracks are inclined. The numerals 20, 21, 22, 23 and 24 indicate recording regions of the data for 9-fold speed search in the normal direction and in the reverse direction. The numeral 3 indicates recording regions of the data for 3-fold speed search in the normal direction and in the reverse direction. The recording regions 20, 21, 22, 23 and 24 have the same size and a same kind of data is recorded in the recording regions 21 and 22, and another same kind of data is also recorded in the recording regions 23 and 24. The multiplex pattern of recording regions for special search data are periodically repeated every 9 tracks.

This embodiment corresponds to 3-fold speed search and 9-fold speed search in the normal and reverse direction. Firstly, the 9-fold speed search in normal direction will be described below, referring to FIG.1. During 9-fold speed search in the normal direction, the tracking is so controlled that the positive azimuth head 4 and the negative azimuth head 5 trace along the broken lines in FIG.1. The recording regions 20, 22 and 23 are arranged in the positions such as to be picked up with this tracing as the output of the heads, and reproduced pictures are reconstructed with the data searched from the recording regions 20, 22 and 23.

The 9-fold speed search in the reverse direction will be described below, referring to FIG.2. During 9-fold speed search in the reverse direction, the tracking is so controlled that the positive azimuth head 4 and the negative azimuth head 5 trace along the broken lines in FIG.2. The recording regions 20, 21 and 24 are arranged in the positions such as to be picked up with this tracing as the output of the heads, and reproduced pictures are reconstructed with the data searched from the recording regions 20, 21 and 24. As described above, the recording region 20 is shared between the normal direction and the reverse direction. And since a same kind of data is recorded in the recording regions 21 and 22 and other same kind of data is recorded in the recording regions 23 and 24, respectively, the reproduced pictures of the 9-fold speed search in the normal direction and the 9-fold speed in the reverse direction are reconstructed using the same data and, therefore, the picture qualities become the same. Since the angle passing across the recording tracks in the reverse direction is smaller than the angle passing across the recording tracks in the normal direction, the size of region to be reproduced becomes small. Therefore, the sizes of the recording regions 20, 21, 22, 23 and 24 are set to a size large enough to be capable of reproducing during tracing in the reverse direction.

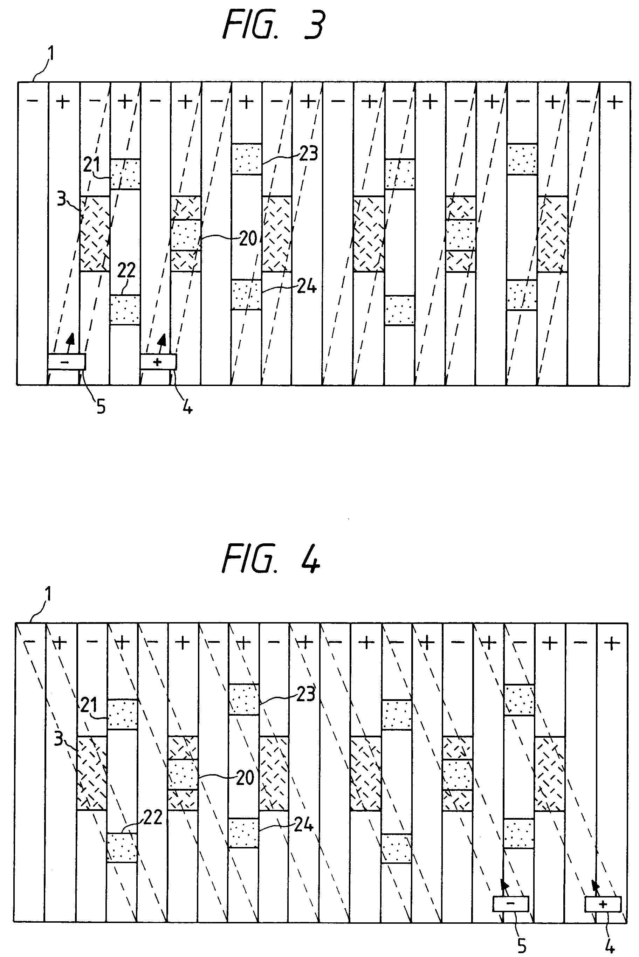

The 3-fold speed search in the normal direction will be described below, referring to FIG.3. During 3-fold speed search in the normal direction, the tracking is so controlled that the positive azimuth head 4 and the negative azimuth head 5 trace along the broken lines in FIG.3. The recording regions 3 are arranged in the positions such as to be picked up with this tracing as the output of the heads, and reproduced pictures are reconstructed with the data searched from the recording regions 3.

The 3-fold speed search in the reverse direction will be described below, referring to FIG.4. During 3-fold speed search in the reverse direction, the tracking is so controlled that the positive azimuth head 4 and the negative azimuth head 5 trace along the broken lines in FIG.4. Similar to the case of the normal direction, reproduced pictures are reconstructed with the data searched from the recording regions 3. As described above, the recording regions 3 are shared between the normal direction and the reverse direction. And the reproduced pictures of the 3-fold speed search in the normal direction and the 3-fold speed in the reverse direction are reconstructed using the same data and, therefore, the picture qualities become the same. The size of the recording regions 3 are set to a size large enough to be capable of reproducing during tracing in the reverse direction. Here, a part in one of the recording regions 3 composes the recording region 20. As described above, the recording regions are shared between the 3-fold speed search and the 9-fold speed search.

As described above, according to the present invention, it is possible to cope with plural speeds of search modes with less recording regions by sharing recording regions for search data between search in the normal direction and search in the reverse direction, and between 3-fold speed search and 9-fold speed search.

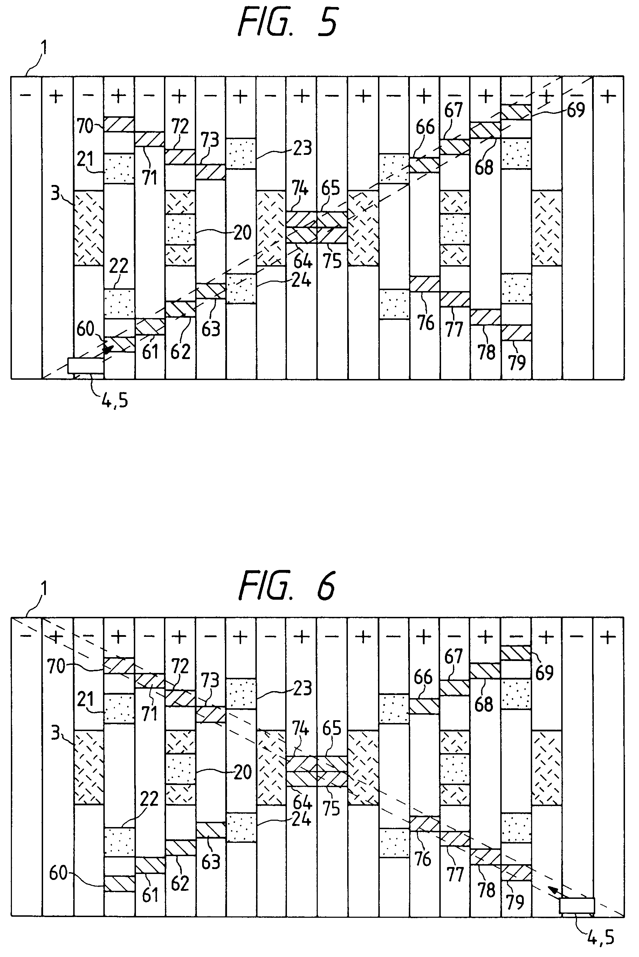

FIG.5 shows an embodiment of a recording pattern on a tape capable of coping with 18-fold speed search in the normal direction. The total multiplex pattern is formed by repeating twice the recording region multiplex patterns in the embodiments shown in FIG.1 to FIG.4 and by adding the recording regions 60, 61, 62, 63, 64, 65, 66, 67, 68, 69 for 18-fold speed search data in the normal direction and the recording regions 70, 71, 72, 73, 74, 75, 76, 77, 78, 79 for 18-fold speed search data in reverse direction, and is periodically repeated every 18 tracks. A same kind of data is recorded in each of the regions 60, 61, 70, 71. Similarly, each of other same kinds of data is recorded in each of four recording region sets of (62, 63, 72,73), (64,65,74,75), (66,67,76,77), (68,69,78,79).

This embodiment copes with 3-fold speed search, 9-fold speed search and 18-fold speed search in the normal direction. Since the operations of 3-fold speed search and 9-fold speed search are the same as described in FIG.1 to FIG.4, the explanation on these is omitted here. The 18-fold speed search in the normal direction will be described, referring to FIG.5. During 18-fold speed search in the normal direction, the tracking is so controlled that the positive azimuth head 4 and the negative azimuth head 5 trace along the broken lines in FIG.5. The heads 4, 5 alternatively trace. When the head 4 traces, the data in the recording regions 60, 62, 64, 66, 68 are reproduced. And when the head 5 traces, the data in the recording regions 61, 63, 65, 67, 69 are reproduced. The data in the recording region 60 is the same as in the recording region 61. Similarly, the data in 62 is the same as in 63, the data in 64 being the same as in 65, the data in 66 being the same as in 67, the data in 68 being the same as in 69. Therefore, the same data is picked up by tracing of either head and reproduced pictures are reconstructed with the data searched.

The 18-fold speed search in the reverse direction will be described, referring to FIG.6. During 18-fold speed search in the reverse direction, the tracking is so controlled that the positive azimuth head 4 and the negative azimuth head 5 trace along the broken lines in FIG.6. When the head 4 traces, the data in the recording regions 70, 72, 74, 76, 78 are reproduced. When the head 5 traces, the data in the recording regions 71, 73, 75, 77, 79 are reproduced. The same data is picked up by tracing of either head and reproduced pictures are reconstructed with the data searched. In both of the 18-fold speed search in the normal direction and the 18-fold speed search in the reverse direction, the reproduced pictures are reconstructed using the same data, and consequently the picture qualities become the same. The sizes of the recording regions are set to a size large enough to be capable of reproducing during tracing in the reverse direction which has a smaller crossing angle.

According to this embodiment, it is possible to cope with 3-fold speed search, 9-fold speed search and 18-fold speed search in the normal direction and in the reverse direction with less recording regions.

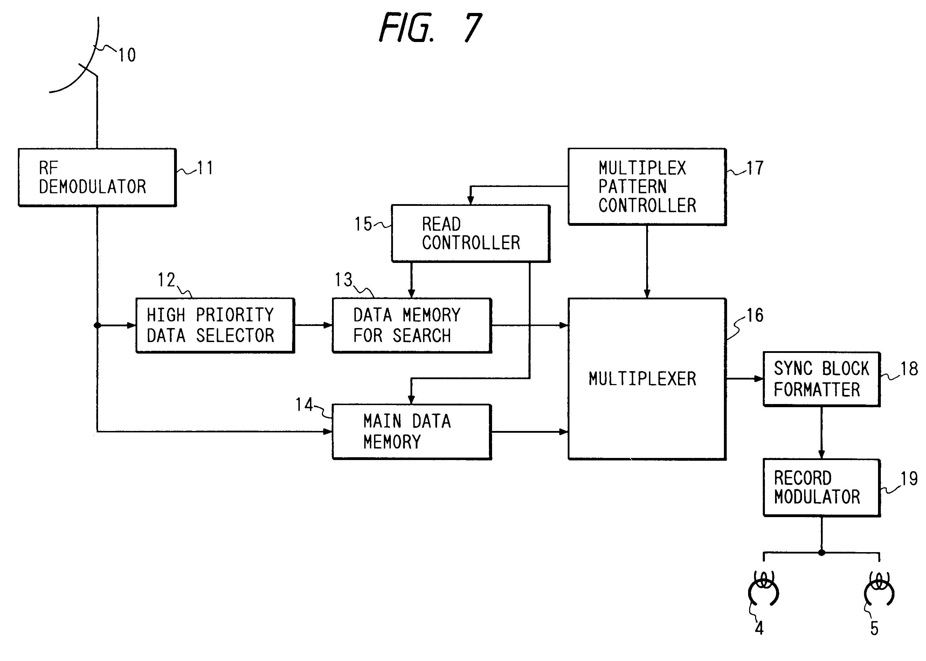

FIG.7 is a circuit block diagram of a recorder realizing the multiplex pattern in a recording region of search data in accordance with the present invention. The numeral 10 is an antenna, the numeral 11 being an RF demodulator, the numeral 12 being a high priority data selector, the numeral 13 being a data memory for search, the numeral 14 being a main data memory, the numeral 15 being a read controller, the numeral 16 being a multiplexer, the numeral 17 being a multiplex pattern controller, the numeral 18 being sync block formatter, the numeral 19 being a record modulator, the numerals 4 and 5 being heads.

The antenna 10 receives broadcasted signals of compressed moving pictures coded through inter frame prediction and orthogonal transformation, the RF demodulator 11 performs RF demodulation of the signals. The moving picture data contains the frame called intra frame, which is obtained by directly performing orthogonal transformation of picture data without taking difference to the inter frame predictor, every a given number of frames. Since all of the data does not become complete in search mode, the data of difference to inter frame predictor is not used but only the intra frame data can be used. The data in each frame is composed of coefficient data corded through variable length cording from DC coefficient to high frequency coefficients after orthogonal transformation. Pictures having some grade of picture quality can be reconstructed using only low coefficients among the data. The high priority selector 12 extracting the intra frame data from the RF demodulated moving picture data from low frequency data by the amount corresponding to the magnitude of the recording regions for search data to store the data memory 13 for search. In this moment, since the data for 3-fold speed and the data for 9-fold speed are shared, the data for 3-fold speed is separated into a shared part with the data for 9-fold speed and the other part to be managed separately.

On the other hand, the RF demodulated moving picture data is stored in the main data memory 14. The multiplex pattern controller 17 generates control signals corresponding to the multiplex pattern in the recording regions for the search data and performs read memory and multiplexing so as to realize desirable patterns. The multiplexed data is added with parity code for error correction and sync code to be supplied to the heads 4 and 5 through recording modulation.

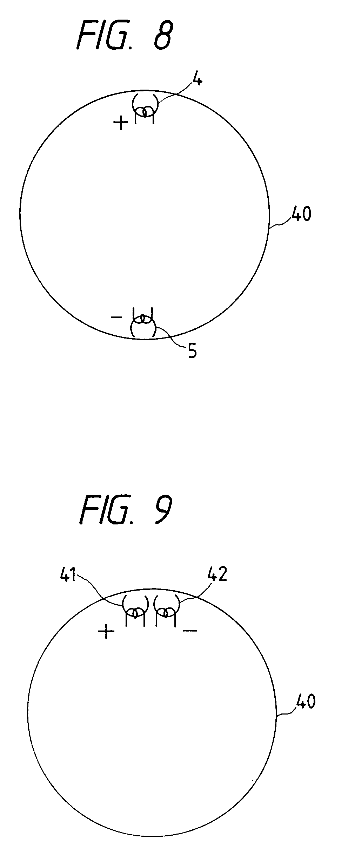

The heads 4 and 5 are placed on a cylinder 40 in facing to each other as shown in FIG.8 and perform recording by forming recording tracks on a tape wrapped on the cylinder alternatively every a half rotation.

According to this embodiment, it is possible to perform the recording having an multiplex pattern capable of coping with plural speed search with less recording regions.

FIG.9 shows another arrangement of heads on a rotating cylinder. A positive azimuth head 41 and a negative azimuth head 42 are placed adjacent to each other. In this arrangement, two recording tracks can be formed in a half rotation at a time.

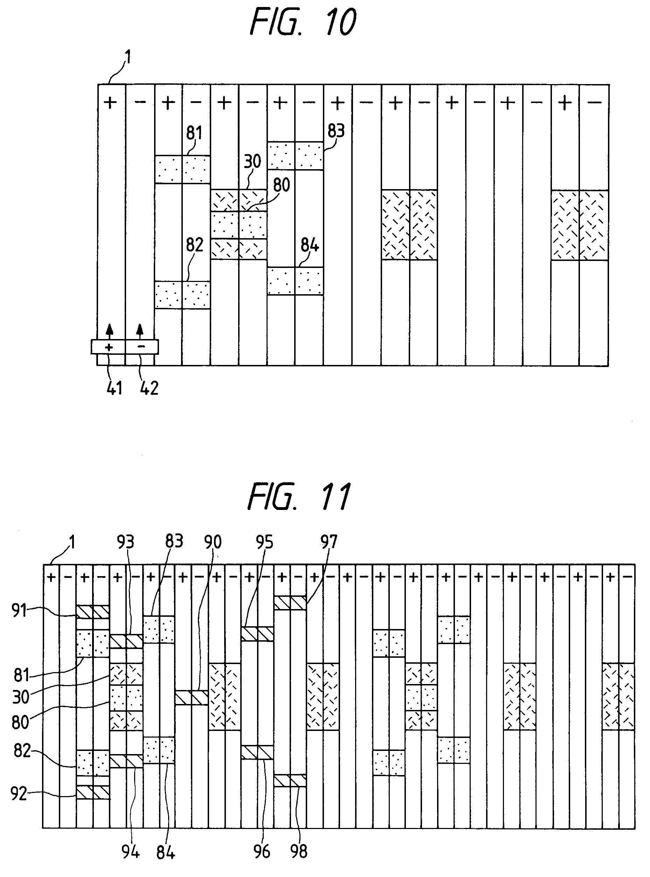

FIG.10 shows an embodiment of a recording pattern on a tape corresponding to the adjacent head type according to the present invention. The numerals 80, 81, 82, 83 and 84 indicates recording regions for 9-fold speed search data in the normal and in the reverse directions. The numeral 30 indicates recording region for 3-fold speed search data in the normal and in the reverse directions. The recording regions 80, 81, 82, 83 and 84 are the same in size. The regions 80 and 81 are recorded the same data and the regions 82 and 83 are recorded the same data. The multiplex patterns of the recording region for search data are repeated every 18 tracks.

This embodiment copes with 3-fold speed and 9-fold speed search in the normal and reverse directions. In 9-fold speed search in the normal direction, the pair of heads 41 and 42 trace the recording regions 82, 80, 83 to reconstruct reproduced pictures using data picked up from these regions. In 9-fold speed search in the reverse direction, the pair of heads 41 and 42 trace the recording regions 84, 80, 81 to reconstruct reproduced pictures using data picked up from these regions. As described above, the recording region 80 is shared with the search in the normal direction and in the reverse direction. Since the data in the region 81 is the same as in the region 82 and the data in the region 83 is the same as in the region 84, the produced picture of 9-fold speed search in the normal direction and the produced picture of 9-fold search in the reverse direction are reconstructed using the same data, and, consequently, have the same picture quality. The sizes of the recording regions 80, 81, 82, 83 and 84 are set to a size large enough to be capable of reproducing during tracing in the reverse direction.

Next, in 3-fold speed search in the normal direction, the pair of heads 41 and 42 trace the recording region 30 to reconstruct reproduced pictures using data picked up from this region. In 3-fold speed search in the reverse direction, the pair of heads 41 and 42 trace the recording region 30 to reconstruct reproduced pictures using data picked up from this region. As described above, the recording region 30 is shared with the search in the normal direction and in the reverse direction. The produced picture of 3-fold speed search in the normal direction and the produced picture of 3-fold search in the reverse direction are reconstructed using the same data, and, consequently, have the same picture quality. The sizes of the recording region 30 is set to a size large enough to be capable of reproducing during tracing in the reverse direction. Here, a part in one of the recording regions 30 composes the recording region 80. As described above, the recording regions are shared between the 3-fold speed search and the 9-fold speed search.

As described above, according to the present invention, it is possible to cope with plural speeds of search modes with less recording regions by sharing recording regions for search data between search in the normal direction and search in the reverse direction, and between 3-fold speed search and 9-fold speed search.

FIG.11 is shows an embodiment of a recording pattern on a tape capable of coping with 18-fold speed search in the normal and reverse directions. The total multiplex pattern is formed by repeating twice the recording region multiplex patterns in the embodiment shown in FIG.10 and by adding the recording regions 90, 91, 92, 93, 94, 95, 96, 97, 98 for 18-fold speed search data in the normal direction and in reverse direction, and is periodically repeated every 36 tracks. A same kind of data is recorded in the regions 91 and 92. Similarly other same kinds of data is recorded in the regions 93 and 94, 95 and 96, 97 and 98.

This embodiment copes with 3-fold speed search, 9-fold speed search and 18-fold speed search in both the normal and the reverse directions. Since the operations of 3-fold speed search and 9-fold speed search are the same as described in FIG.10, the explanation on these is omitted here. During 18-fold speed search in the normal direction, the pair of heads 41 and 42 trace the recording regions 92, 94, 90, 95, 97 to reconstruct reproduced pictures using data picked up from these regions. In 18-fold speed search in the reverse direction, the pair of heads 41 and 42 trace the recording regions 98, 96, 90, 93, 91 to reconstruct reproduced pictures using data picked up from these regions. The produced picture of 18-fold speed search in the normal direction and the produced picture of 18-fold search in the reverse direction are reconstructed using the same data, and, consequently, have the same picture quality. The sizes of the recording regions are set to a size large enough to be capable of reproducing during tracing in the reverse direction.

According to this embodiment, it is possible to cope with 3-fold speed search, 9-fold speed search and 18-fold speed search in the normal direction and in the reverse direction with less recording regions.

According to the present invention, it is possible to cope with plural multiple-speed mode with a small amount of recording regions by sharing recording regions for high speed search data among different multiple-speed modes.

Further, it is possible to simplify the processing and decrease the circuit scale by recording the same data in the recording regions for high speed search data for two search speed modes having the same absolute value of speed and different directions.

Furthermore, it is possible to decrease the circuit scale though periodic processing by periodically repeating the multiplex patterns.

## Claims

1. A recording pattern making method for compressed moving picture data taking a part of main data required for high speed search from compressed moving picture data, providing a recording region for the high speed search data in a specified parts of the recording track of a tape recording medium to record the data, wherein:
recording regions for the high speed search data are arranged in such parts as to come to a head trace in a multiple speed search mode corresponding to each of plural kinds of different multiple speed search modes and as to share the recording regions for high speed search data with the different multiple modes.

2. A recording pattern making method for compressed moving picture data taking a part of main data required for high speed search from compressed moving picture data, providing a recording region for the high speed search data in a specified parts of the recording track of a tape recording medium to record the data, wherein:
recording regions for the high speed search data are arranged in such parts as to come to a head trace in a multiple speed search mode corresponding to each of plural kinds of different multiple speed search modes; and the same data is recorded in the two recording regions for high speed search data of multiple speed modes having the same multiple number and different directions.

3. A recording pattern making method for compressed moving picture data taking a part of main data required for high speed search from compressed moving picture data, providing a recording region for the high speed search data in a specified parts of the recording track of a tape recording medium to record the data, wherein:
recording regions for the high speed search data are arranged in such parts as to come to a head trace in a multiple speed search mode corresponding to each of plural kinds of different multiple speed search modes; and multiplex patterns are repeated with the period of the least common multiple of the periods of head traces for all the corresponding multiple speed search modes.

4. A compressed moving picture recording apparatus for recording on a recording medium with the recording pattern making method for compressed moving picture data according to claim 1.

5. A compressed moving picture recording apparatus for recording on a recording medium with the recording pattern making method for compressed moving picture data according to claim 2.

6. A compressed moving picture recording apparatus for recording on a recording medium with the recording pattern making method for compressed moving picture data according to claim 3.
